# FASCICULE DE BREVET EUROPEEN

(11) **EP 0 886 977 B1**
(45) Date de publication et mention de la délivrance du brevet: **24.09.2003**
(21) Numéro de dépôt: 97908331.8
(22) Date de dépôt: 11.03.1997
(51) Int. Cl.: H04Q 1/14

(54) **DISPOSITIF POUR RELIER DES CONDUCTEURS D'UN CABLE DE TRANSPORT A DES CONDUCTEURS D'UN CABLE DE DISTRIBUTION**
VORRICHTUNG ZUM VERBINDEN VON DEN LEITUNGEN EINES ÜBERTRAGUNGSKABELS MIT DEN LEITUNGEN EINES VERTEILKABELS
DEVICE FOR CONNECTING POWER CABLE CONDUCTORS TO DISTRIBUTION CABLE CONDUCTORS

(30) Priorité: 12.03.1996 FR 9603082
(43) Date de publication de la demande: 30.12.1998
(73) Titulaire: POUYET S.A., 94207 Ivry sur Seine (FR); RADIALL S.A., 93110 Rosny-Sous-Bois (FR)
(72) Inventeur: DILLAT, Michel, Louis, Romain, F-92400 Courbevoie (FR); CHOPIN, Franck, Rémi, Yves, Dominique, 94700 MAISONS-ALFORT (FR)
(74) Mandataire: Leszczynski, André
(86) Numéro de dépôt international: FR9700422
(87) Numéro de publication internationale: WO97034427

(56) Documents cités:
- DE-A- 3 743 108
- DE-A- 3 801 876
- US-A- 3 708 628

## Description

La présente invention concerne un dispositif pour relier des conducteurs d'un câble de transport à des conducteurs d'un câble de distribution.

Aux différents noeuds d'un réseau de distribution, on trouve des dispositifs permettant de relier un ou plusieurs câbles de transport à un ou plusieurs câbles de distribution afin de créer des ramifications du réseau.

Ces dispositifs sont désignés, suivant leur niveau dans le réseau, par les termes de coffrets de distribution, bornes de distribution ou d'éclatement, sous répartiteurs intérieur ou extérieur et répartiteur.

Dans chaque cas, au moine un câble de transport et au moins un câble de distribution arrivent jusqu'au dispositif où ils sont connectés de façon appropriée, chaque conducteur du câble de transport, ou conducteur de transport, étant relié un à un conducteur du câble de distribution, ou conducteur de distribution, par un conducteur de liaison, également désigné sous le terme de "jarretière".

Dans les installations existantes de réseaux de communication, des têtes de câbles sont agencées verticalement les unes au-dessus des autres en étant montées sur des fermes qui sont constituées par des profilés verticaux.

Une pluralité de fermes sont généralement disposées les unes à côté des autres de sorte que l'ensemble forme un répartiteur à deux dimensions dans lequel les têtes de câbles sont réparties en rangées et en colonnes.

Le câble de transport aboutit à certaines têtes de câbles et le câble de distribution aboutit à d'autres têtes de câbles, des jarretières reliant les têtes de câbles deux à deux en cheminant dans le répartiteur en suivant les lignes et les colonnes de ce dernier.

Les conducteurs peuvent être des conducteurs électriques, c'est-à-dire en général des fils de cuivre, ou des conducteurs optiques, c'est-à-dire des fibres optiques.

Dans le premier cas, les jarretières sont constituées par des tronçons de fil électrique, tandis que dans le second cas, ce sont des tronçons de fibre optique.

Dans les deux cas, l'agencement en rangées et en colonnes des têtes de câbles oblige à utiliser des jarretières de longueurs différentes d'une paire de conducteurs à l'autre.

Ceci nuit à l'organisation générale du répartiteur et ne permet pas un repérage visuel facile des différentes jarretières reliant les câbles de transport aux câbles de distribution.

En particulier, un problème se pose lorsque l'on désire modifier un raccordement en changeant uniquement le conducteur de distribution raccordé à un conducteur de transport.

En effet, les jarretières sont généralement tellement entremêlées les unes aux autres qu'il n'est pas possible de déplacer l'une des extrémités d'une jarretière pour la raccorder à un nouveau conducteur de distribution.

On préfère alors couper les deux extrémités de la jarretière et laisser celle-ci en place, puis ajouter une nouvelle jarretière entre le conducteur de transport et le nouveau conducteur du câble de distribution.

Il faut donc régulièrement intervenir sur le répartiteur pour en refaire tous les raccordements et éliminer les jarretières devenues inutiles.

On connaît par ailleurs par US-A-3708628 un dispositif dans lequel des câbles entrants sont réunis à proximité d'un corps de guidage et les extrémités des conducteurs desdits câbles sont raccordées directement à des éléments de contact reliés aux conducteurs des câbles sortants et répartis en arc de cercle sans utiliser de jarretières. Rien dans ce document n'est de nature à inciter l'homme de l'art à modifier le dispositif décrit pour y introduire des jarretières.

La présente invention vise à fournir un dispositif qui résout notamment les inconvénients ci-dessus en étant d'une gestion et d'un entretien aisés et qui est d'une réalisation particulièrement simple et économique.

La présente invention a pour objet un dispositif pour relier les conducteurs d'un câble de transport à des conducteurs d'un câble de distribution, les extrémités des conducteurs étant montées à poste fixe sur le dispositif et pouvant être reliées entre elles par des jarretières qui sont chacune connectées, d'une part à un conducteur du câble de transport et d'autre part à un conducteur du câble de distribution, caractérisé par le fait que les extrémités des conducteurs du câble de transport et du câble de distribution sont réparties autour d'un moyeu sur lequel peuvent s'enrouler les jarretières reliant chacune deux extrémités de conducteurs.

En d'autres termes, l'invention consiste à agencer les extrémités des conducteurs qui sont reliées entre elles par les jarretières, non plus, comme dans l'état de la technique, suivant des rangées et des colonnes, mais autour d'un moyeu.

Dans un mode de réalisation particulier, les extrémités des conducteurs du câble de transport et de distribution sont réparties sensiblement le long d'un cercle.

Selon l'invention, on entend par sensiblement le long d'un cercle, le fait, pour les extrémités des conducteurs des câbles de transport et de distribution, de se trouver au voisinage d'une ligne ouverte ou fermée tracée autour du moyeu, cette ligne pouvant être non seulement un cercle mais également un ovale, une ellipse, un carré ou un rectangle, cette liste n'étant pas limitative.

Ainsi, toutes les jarretières peuvent présenter une même longueur, voisine du diamètre du cercle ou de la plus grande largeur de la ligne suivant laquelle les extrémités des conducteurs sont réparties.

D'un point de vue pratique, ceci peut s'avérer extrêmement intéressant car de telles jarretières de longueur identique peuvent être préparées à l'avance en usine.

En particulier, dans le cas de conducteurs optiques, cet avantage évite de devoir couper, dénuder et cliver les fibres optiques constituant les jarretières sur site, ce qui est une opération délicate.

Dans le dispositif selon l'invention, le retrait d'une jarretière devenue inutile ne pose pas de problème car les jarretières ne sont pas enchevêtrées les unes dans les autres.

En outre, le dispositif selon l'invention ne nécessite pas la présence d'une ferme mais requiert simplement un support, par exemple un panneau ou une roue, sur lequel les extrémités des conducteurs peuvent être disposées autour du moyeu.

Il peut néanmoins s'adapter sur un répartiteur existant à l'aide d'un support spécifique adaptable sur une ferme.

Le fait de disposer les extrémités des conducteurs autour d'un moyeu conformément à l'invention, permet également d'atteindre une densité de raccordement très supérieure à celle que l'on peut atteindre avec un répartiteur traditionnel. On peut ainsi réduire l'encombrement global du répartiteur.

Dans un mode de réalisation particulier de l'invention, le dispositif comporte un panneau, les câbles de transport et de distribution se situant d'un côté de ce panneau, les extrémités des conducteurs étant réparties sur le panneau sensiblement le long d'un cercle, les jarretières se situant de l'autre côté du panneau où elles relient les extrémités des conducteurs auxquelles elles sont raccordées à travers ledit panneau.

Ce mode de réalisation facilite la maintenance du dispositif en permettant, par exemple par basculement du panneau, d'intervenir sur le branchement des conducteurs des câbles de transport et de distribution sans devoir accéder à la face arrière du dispositif.

On comprend qu'il est particulièrement aisé de déplacer seulement l'une des extrémités d'une jarretière pour la raccorder à un nouveau conducteur sans pour autant devoir démonter son autre extrémité. Le déplacement de l'extrémité de la jarretière s'effectue en effet par simple rotation du tronçon de jarretière s'étendant depuis le moyeu jusqu'à l'extrémité à déplacer de la jarretière.

Avantageusement, le moyeu présente une section appropriée pour faciliter le rangement des jarretières.

Ainsi, le moyeu peut présenter une forme tronconique qui permet d'accumuler les jarretières au voisinage du panneau, le cas échéant.

Le moyeu peut également comporter plusieurs cloisonnements, ce qui évite l'enchevêtrement des jarretières.

Dans ce cas, le diamètre du moyeu peut varier d'un cloisonnement à l'autre de manière à compenser l'augmentation de chemin à parcourir par la jarretière du fait du décalage axial du cloisonnement. Par exemple, le diamètre du moyeu peut décroître à mesure que l'on s'éloigne du panneau sur lequel les extrémités des conducteurs sont agencées en cercle.

Le diamètre du moyeu présente une importance particulière dans le cas où les conducteurs sont des fibres optiques car il garantit le rayon de courbure minimal des jarretières.

Avantageusement, le dispositif comporte un moyen pour maintenir les jarretières sur le moyeu, par exemple un peigne circulaire situé à l'intérieur du cercle le long duquel les extrémités des conducteurs sont réparties.

Les parties terminales des jarretières sont alors coincées entre deux dents du peigne, ce qui les maintient en place.

Dans une variante préférée, le dispositif comporte un moyen de guidage des parties d'extrémité des jarretières qui assure leur positionnement selon une direction sensiblement radiale par rapport au moyeu, de manière à faciliter leur engagement dans les dents du peigne.

En outre, ce moyen de guidage peut servir de support pour les jarretières, en évitant que celles présentant un surplus de longueur ne viennent géner l'accès aux extrémités des jarretières, là où celles-ci se raccordent aux extrémités des conducteurs des câbles de transport et de distribution.

Pour protéger les extrémités des jarretières, le dispositif comporte avantageusement des capote de protection qui recouvrent un ensemble d'extrémités de jarretières.

Dans le but de protéger les jarretières sur toute leur longueur, le dispositif peut comporter un ensemble de goulottes radiales aptes à recevoir plusieurs jarretières et s'étendant depuis le voisinage du moyeu jusqu'au voisinage des extrémités des câbles de transport et de distribution, ces goulottes étant fermées par une cloison munie d'une fente permettant le passage d'une seule jarretière.

Dans un mode de réalisation particulier de l'invention, le dispositif comporte un bras monté pivotant sur un axe passant par le centre du moyeu, qui peut correspondre au centre du cercle le long duquel sont réparties les extrémités des conducteurs, la longueur dudit bras étant sensiblement égale au rayon du cercle.

Sur un tel bras, on peut par exemple monter un outil permettant la préparation des jarretières pour leur raccordement aux extrémités des conducteurs, l'outil étant déplaçable le long du cercle par rotation du bras.

On peut également prévoir une loupe à l'extrémité du bras pour faciliter les interventions de l'opérateur chargé de mettre en place les jarretières.

En utilisation, il peut être préférable que les extrémités des conducteurs de transport et de distribution soient regroupées par secteurs angulaires autour du moyeu, chaque secteur angulaire correspondant par exemple à une zone géographique desservie par les conducteurs du câble de distribution ou à une zone géographique d'où proviennent les conducteurs du câble de transport.

Selon une variante avantageuse, le dispositif comporte également un moyeu du côté du panneau où se situent les câbles de transport et de distribution, moyeu autour duquel les conducteurs desdits câbles s'enroulent, leurs extrémités étant réparties sensiblement le long d'un cercle ou d'une ligne ouverte ou fermée.

Dans un mode de réalisation particulier de l'invention, le dispositif comporte deux panneaux, découpés sous forme de roues, sensiblement parallèles, ayant chacun une face externe opposée à la face externe de l'autre panneau et une face interne en regard de la face interne de l'autre panneau et munis chacun d'un évidement, les deux évidements se trouvant dans l'alignement l'un de l'autre et formant un moyeu creux, les câbles de transport et de distribution se situant entre les faces internes de ces deux panneaux, les extrémités des conducteurs du câble de transport étant réparties sur le premier panneau autour de l'évidement, les extrémités des conducteurs du câble de distribution étant réparties sur le second panneau autour de l'évidement, les jarretières s'étendant depuis la face externe du premier panneau, où elles sont chacune raccordée à une extrémité d'un conducteur du câble de transport à travers le premier panneau, jusqu'à la face externe du second panneau, où elles sont chacune raccordée à une extrémité d'un conducteur du câble de distribution à travers le second panneau, lesdites jarretières passant par les évidements des premier et second panneaux.

En d'autres termes; dans ce mode de réalisation, le dispositif comporte deux panneaux dont le premier est réservé aux conducteurs du câble de transport, tandis que le second est réservé aux conducteurs du câble de distribution, les liaisons entre ces conducteurs s'effectuant par des jarretières qui passent d'un panneau à l'autre en traversant leurs parties centrales évidées constituant un moyeu creux.

Dans un autre mode de réalisation de l'invention, le dispositif comporte, sur un même panneau, une pluralité de moyeux autour desquels sont réparties les extrémités des conducteurs des câbles de transport et de distribution, un espace étant réservé pour le passage des jarretières entre deux moyeux voisins.

Selon l'invention, les conducteurs peuvent être des conducteurs de lumière, c'est-à-dire des fibres optiques ou des conducteurs d'électricité, c'est-à-dire des fils électriques, ou tous autres conducteurs devant être raccordés entre eux.

Dans le but de mieux faire comprendre l'invention, on va en décrire maintenant des modes de réalisation donnés à titre d'exemples non limitatifs en référence au dessin annexé dans lequel :
- la figure 1 est une vue en perspective d'un répartiteur selon l'état de la technique,
- la figure 2 est une vue en élévation d'un dispositif selon l'invention,
- la figure 3 est une vue de derrière du panneau du dispositif de la figure 2,
- la figure 4 est une vue en perspective représentant un autre mode de réalisation du dispositif selon l'invention,
- la figure 5 est une vue en élévation d'un dispositif selon un autre mode de réalisation de l'invention,
- la figure 6 est une vue en coupe axiale d'un moyeu d'un dispositif selon l'invention,
- la figure 7 est une vue analogue à la figure 7 d'une variante du moyeu,
- la figure 8 est une vue en élévation d'un dispositif selon un autre mode de réalisation de l'invention,
- la figure 9 est une vue de derrière du dispositif de la figure 8,
- la figure 10 est une vue en élévation d'un dispositif selon un autre mode de réalisation de l'invention,
- la figure 11 est une vue de dessus de la figure 10,
- la figure 12 est une vue en coupe selon A-A de la figure 11,
- la figure 13 est une vue en perspective de trois-quart avant du dispositif des figures 10 à 12,
- la figure 14 est une vue analogue à la figure 13, le dispositif étant vu de l'autre côté et certains capots de protection étant retirés, et
- la figure 15 est une vue en perspective de trois-quart arrière du dispositif des figures 10 à 14.

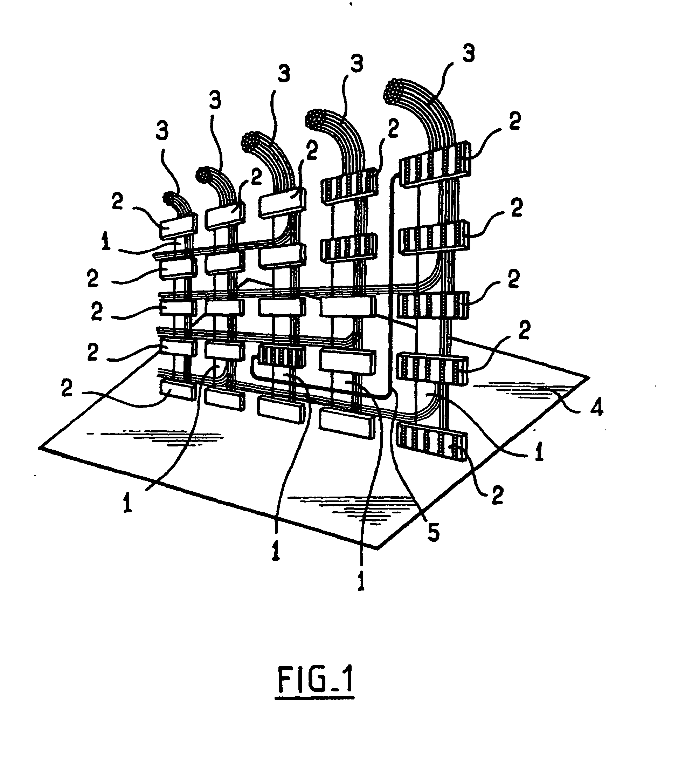

Le répartiteur conventionnel représenté sur la figure 1 comprend cinq fermes 1, qui sont constituées par des profilés métalliques, disposées verticalement les unes à côté des autres.

Chaque ferme supporte un ensemble de cinq têtes de câbles 2 qui sont ainsi réparties suivant cinq rangées et cinq colonnes du répartiteur.

Des faisceaux de câbles 3 arrivent au répartiteur par la partie supérieure de celui-ci. D'autres faisceaux de câbles non représentés arrivent par la partie inférieure du répartiteur sous le plancher 4 qui le supporte.

Comme on le voit sur la figure 1, les câbles circulent dans le répartiteur suivant les rangées et les colonnes de ce dernier.

Chaque conducteur d'un câble est raccordé à un contact d'une tête de câble 2, sur la face arrière de celle-ci.

Pour la clarté du dessin, on n'a représenté les contacts que sur huit des vingt cinq têtes de câbles représentées ici.

Les faces avant des têtes de câbles sont destinées à recevoir des jarretières qui relient les contacts deux à deux.

Une seule jarretière 5 est représentée sur la figure 1. On voit que cette jarretière a été préparée sur mesure de manière à pouvoir cheminer horizontalement puis verticalement dans le répartiteur entre les deux contacts qu'elle relie.

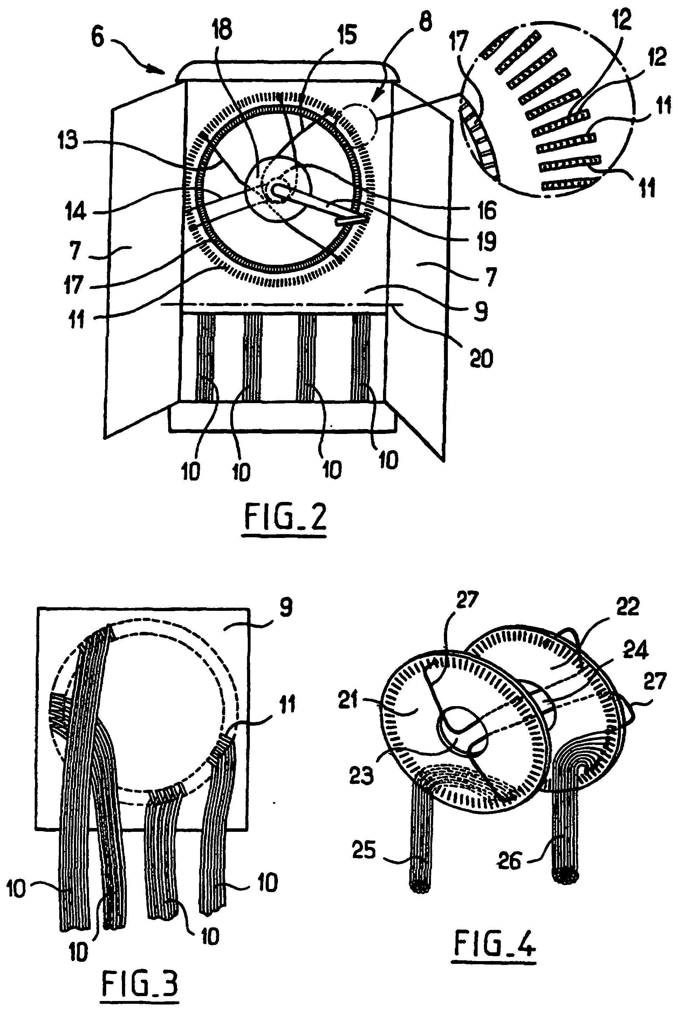

Le répartiteur représenté à la figure 2 comprend une armoire 6 à deux portes 7, à l'intérieur de laquelle est logé un dispositif 8 selon l'invention.

Ce dispositif 8 comprend un panneau 9 dont la face avant est visible sur la figure 2 et dont la face arrière est visible sur la figure 3.

Des faisceaux de câbles 10 aboutissent au panneau 9 par la partie inférieure de l'armoire 6 et viennent se raccorder sur la face arrière du panneau 9 dans des modules de contact 11 qui traversent l'épaisseur du panneau 9.

Les modules de contact 11 sont répartis sur le panneau 9 le long d'un cercle.

Sur la vue de détail de la figure 2, on voit que les modules de contact 11 apparaissent sur la face avant du panneau 9 où ils présentent un certain nombre de contacts 12 aptes chacun à recevoir l'extrémité d'une jarretière par simpe emmanchement.

Trois jarretières 13, 14 et 15 sont représentées sur la figure 2.

Ces jarretières présentent toutes sensiblement la même longueur, cette longueur étant voisine du diamètre du cercle suivant lequel les modules de contact 11 sont répartis.

Un moyeu 16 est situé au centre du cercle pour servir d'appui aux jarretières 14, 15, lesquelles peuvent ainsi être tendues entre leurs deux extrémités, en étant en outre maintenues entre les dents d'un peigne 17 de forme également circulaire, situé à l'intérieur du cercle formé par les modules de contact 11.

On comprend que les jarretières ainsi agencées ne sont entremêlées les unes aux autres qu'au voisinage du moyeu 16, c'est-à-dire sur une faible portion de leur longueur.

Ainsi, l'extraction d'une jarretière devenue inutile ou le déplacement de l'une des extrémités d'une jarretière d'un contact 12 à un autre, ne présente aucune difficulté.

En outre, le repérage visuel des jarretières est facilité, notamment si les modules de contact sont répartis par secteur angulaire en fonction des câbles de transport et/ou de distribution 10 auxquels ils correspondent, comme on le voit sur la figure 3.

Le moyeu 16 supporte, à l'opposé du panneau 9, un disque 18 qui maintient les jarretières sur ledit moyeu.

Un bras 19, monté pivotant sur le disque 18 et présentant sensiblement une longueur égale au rayon du cercle formé par les modules de contact, peut servir à poser un outillage permettant de préparer les extrémités des jarretières.

Ce bras 19 peut également être utilisé pour automatiser les changements de raccordement entre les conducteurs de transport et les conducteurs de distribution.

Ainsi, à distance, on peut exécuter une modification des branchements, ou encore mettre en oeuvre une commutation lente des abonnés, notamment dans un réseau de fibres optiques.

Le fait que les câbles de transport et de distribution 10 aboutissent sur la face arrière du panneau 9 permet, par un simple pivotement du panneau 9 par rapport à un axe horizontal 20, d'intervenir sur les branchements des câbles sur les modules de contact sans devoir accéder à l'arrière de l'armoire 6.

Ainsi, contrairement aux répartiteurs antérieurs dont les fermes ne peuvent pas être basculées individuellement en raison des câbles qui les relient entre elles et qui doivent donc être accessibles par l'arrière, le dispositif selon l'invention peut être adossé à un mur.

Dans le mode de réalisation représenté à la figure 4, le dispositif comprend deux panneaux 21, 22 qui sont découpés sous la forme de roues, maintenues parallèles entre elles avec leurs faces internes en regard et leurs faces externes opposées.

Chaque roue 21, 22 est évidée à sa partie centrale 23, 24.

Comme précédemment décrit, des câbles de conducteurs aboutissent aux roues, un câble de transport 25 étant branché sur la face interne de la roue 21, tandis qu'un câble de distribution 26 est branché sur la face interne de la roue 22.

Des jarretières 27 relient deux à deux les contacts apparaissant sur la face externe de la roue 21 aux contacts apparaissant sur la face externe de la roue 22, en passant d'une roue à l'autre au travers des évidements 23 et 24.

Ainsi, comme précédemment décrit, toutes les jarretières du dispositif présentent la même longueur, laquelle est sensiblement égale au diamètre des roues augmenté de la distance qui sépare lesdites roues.

Dans ce mode de réalisation, la gestion des jarretières peut être facilitée par le fait que tous les branchements aux conducteurs des câbles de transport sont réalisés sur la même face du dispositif, tandis que tous les branchements aux conducteurs des câbles de distribution sont réalisées sur l'autre face du dispositif.

En montant les deux roues 21 et 22 sur un même support articulé autour d'un axe horizontal, comme le panneau 9 de la figure 2, on peut installer le dispositif de la figure 4 dans une armoire et accéder à la face externe de la roue 22 par basculement du support.

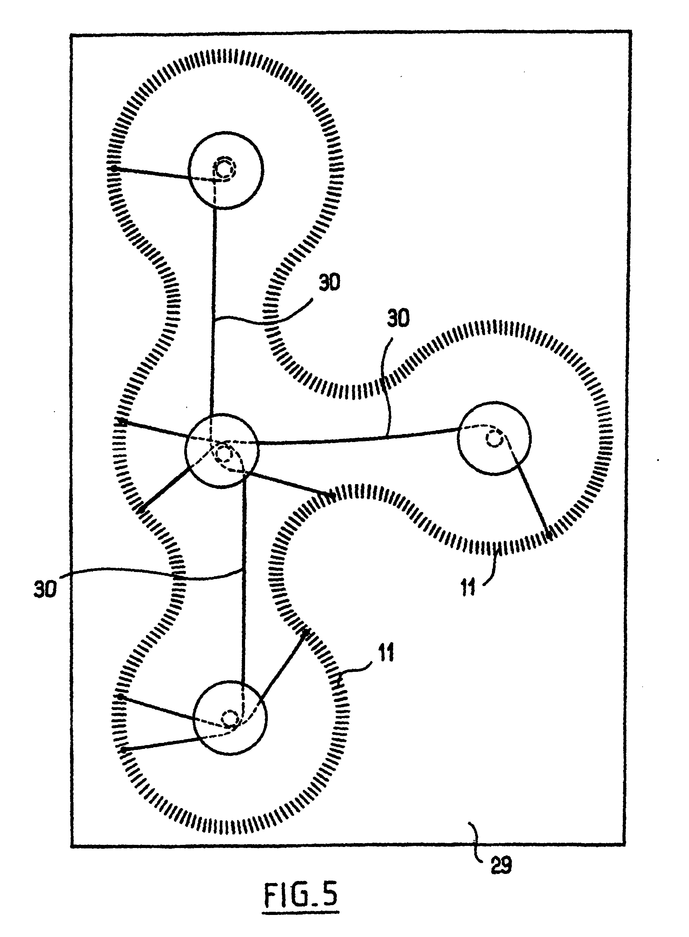

Dans le mode de réalisation de la figure 5, plusieurs cercles de module de contact 11 sont agencés sur un même panneau 29, des espaces étant réservés entre les centres de deux cercles voisins pour le passage de jarretières 30 reliant des contacts présents sur ces cercles.

Dans ce mode de réalisation, il faut prévoir plusieurs longueurs de jarretières mais le nombre de longueurs différentes nécessaire n'est que de trois, ce qui est très faible compte tenu du nombre important de contacts réunis sur ce même panneau 29.

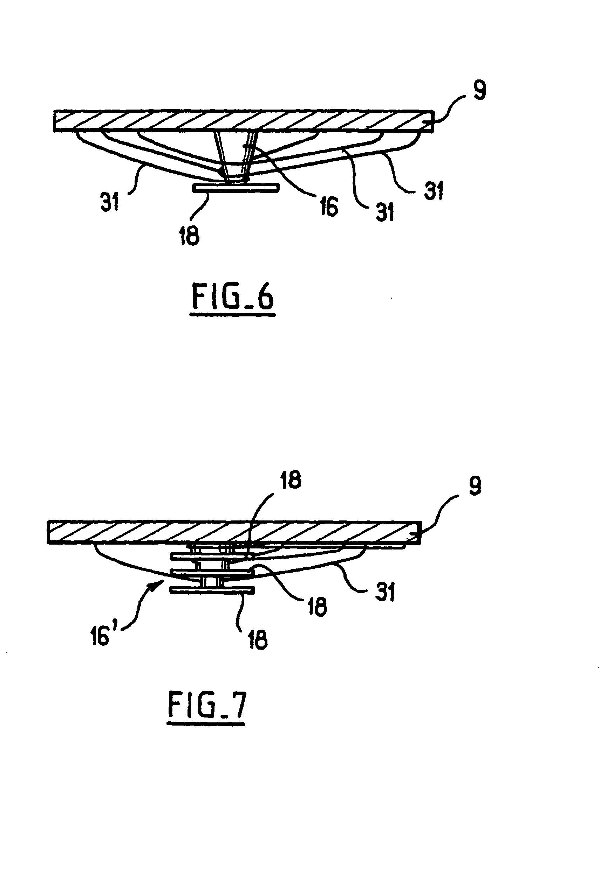

Sur la figure 6. on a représenté en coupe le panneau 9. le moyeu 16 et le disque 18 de la figure 2.

La forme tronconique du moyeu permet de rassembler les jarretières 31 au voisinage du disque 18, ce qui évite leur accumulation au voisinage du panneau 9.

Sur la variante représentée à la figure 7, le moyeu 16' est compartimenté en comportant une pluralité de disques 18.

On limite ainsi le risque d'enchevêtrement des jarretières.

On peut noter que le diamètre du moyeu 16' est croissant en direction du panneau 9 de manière que la longueur de jarretière nécessaire pour raccorder deux contacts reste identique quel que soit le compartiment du moyeu utilisé par cette jarretière.

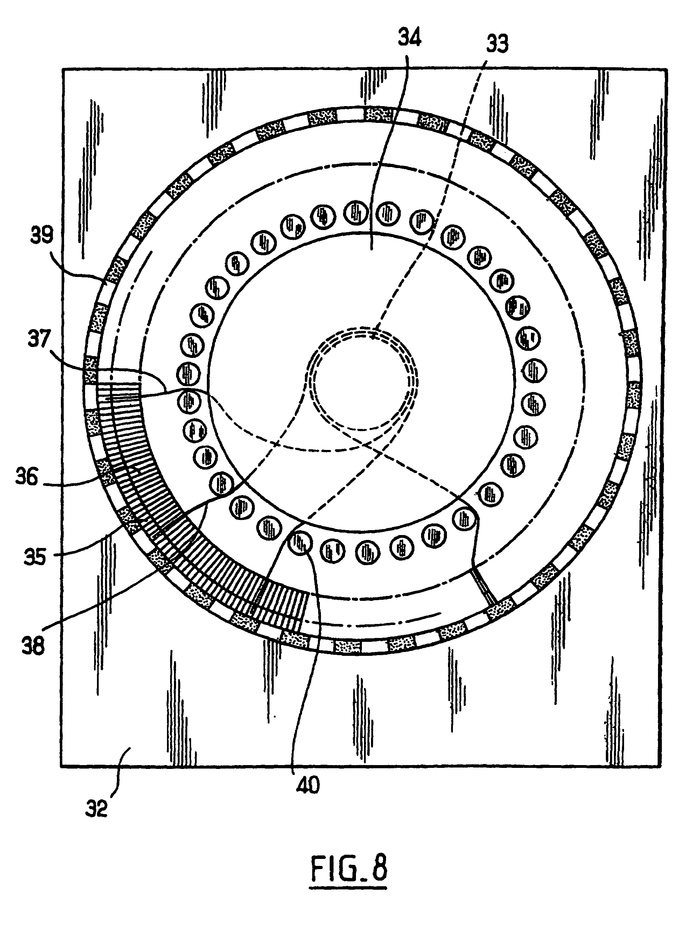

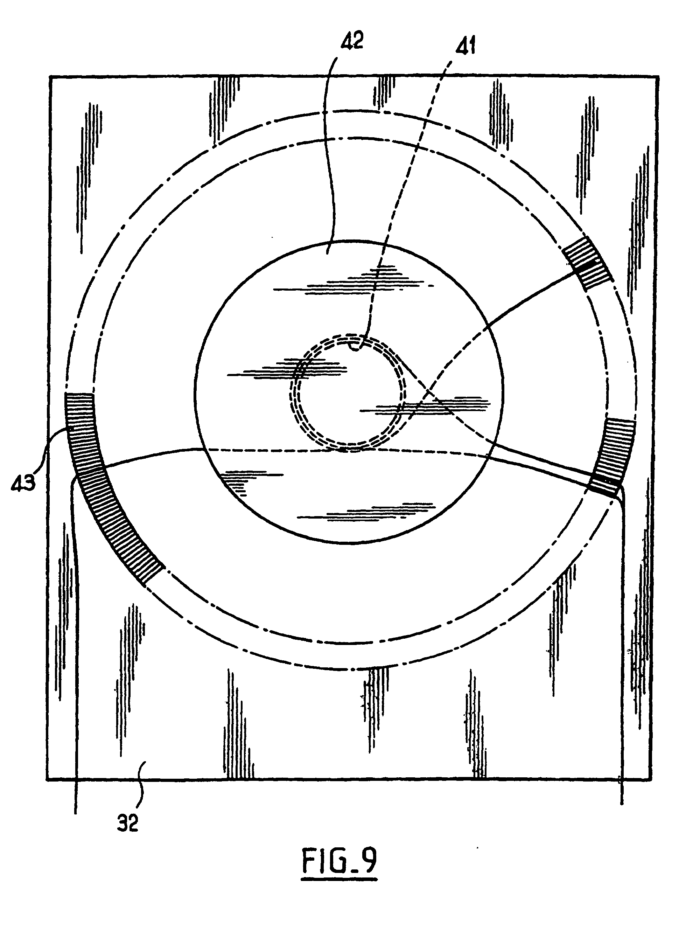

Le dispotif représenté aux figures 8 et 9 comprend un panneau 32 vertical sur lequel est monté, en face avant, un moyeu 33 portant un disque 34. Des modules de contact 35 (dont une partie seulement a été représentée sur le dessin) sont répartis sur le panneau le long d'un cercle concentrique au moyeu 33 et au disque 34.

Des peignes 36 sont adjacents au module de contact 35, ces peignes ayant pour fonction de maintenir les jarretières 37, 38 en position.

A la périphérie des modules de contact 35, le panneau comporte un marquage 39 qui permet de repérer visuellement les modules de contact 35.

Une pluralité de plots cylindriques 40, répartis en cercle sur le panneau autour du disque 34, constitue un moyen de guidage des parties d'extrémité des jarretières qui assurent leur positionnement selon une direction sensiblement radiale par rapport au moyeu, de manière notamment à faciliter leur engagement dans les dents du peigne 36.

Ces plots cylindriques 40 assurent en outre la fonction de maintien des jarretières à l'abri du disque 34 dans l'hypothèse par exemple où une jarretière trop longue, bien qu'enroulée sur le moyeu, dépasserait à la partie inférieure du disque 34.

Comme on le voit à la figure 9, le panneau 32 comporte également un moyeu 41 sur sa face arrière, ce moyeu 41 pouvant être le prolongement du moyeu 33 de la face avant.

Un disque 42 semblable au disque 34 de la face avant est également porté par le moyeu 41.

Les câbles de transport et de distribution arrivent par le bord inférieur du panneau 32 et montent verticalement jusqu'à un peigne périphérique 43 qui permet aux fibres optiques de pénétrer radialement sous le disque 42 pour s'enrouler autour du moyeu 41.

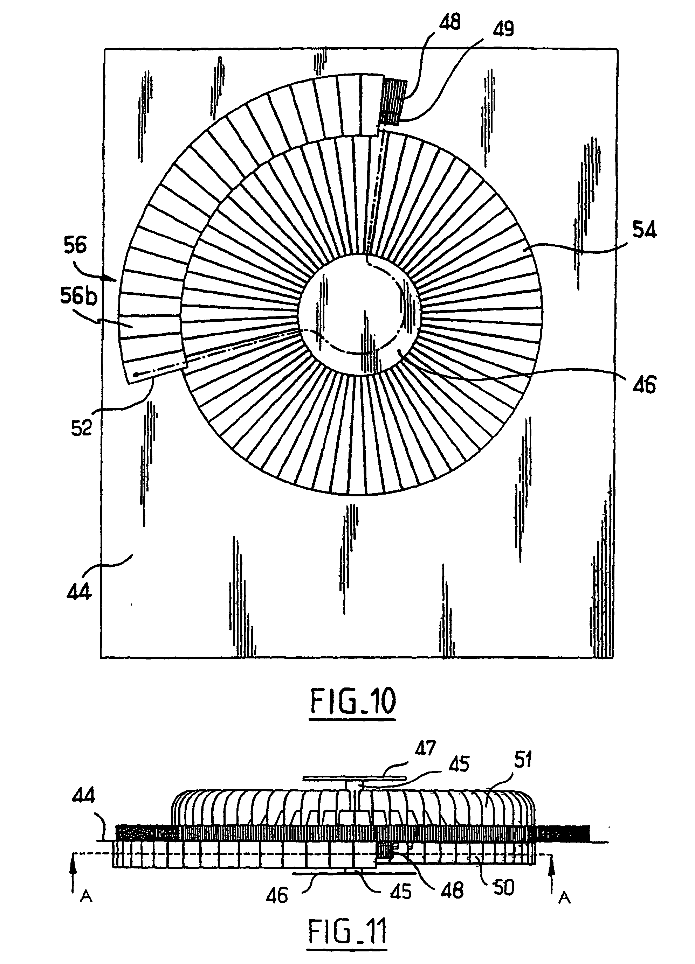

Dans le mode de réalisation des figures 10 à 15, le dispositif comporte également un panneau 44 vertical portant un moyeu 45 qui le traverse de part en part et fait saillie sur ses deux faces, le moyeu 45 portant un disque 46, 47 sur les faces avant et arrière du panneau 44.

Comme décrit précédemment, des modules de contact 48 et un peigne circulaire 49 entourent le moyeu.

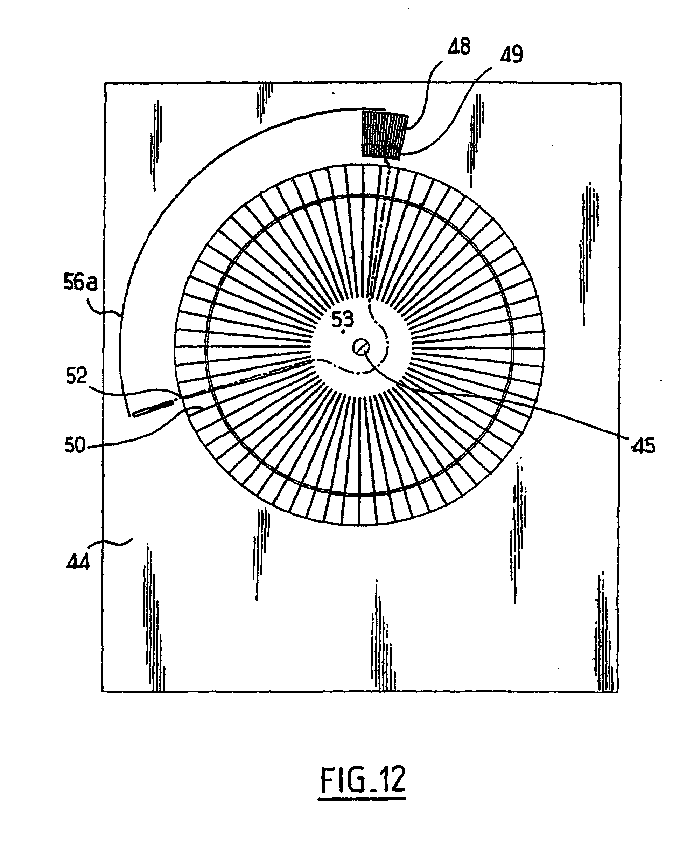

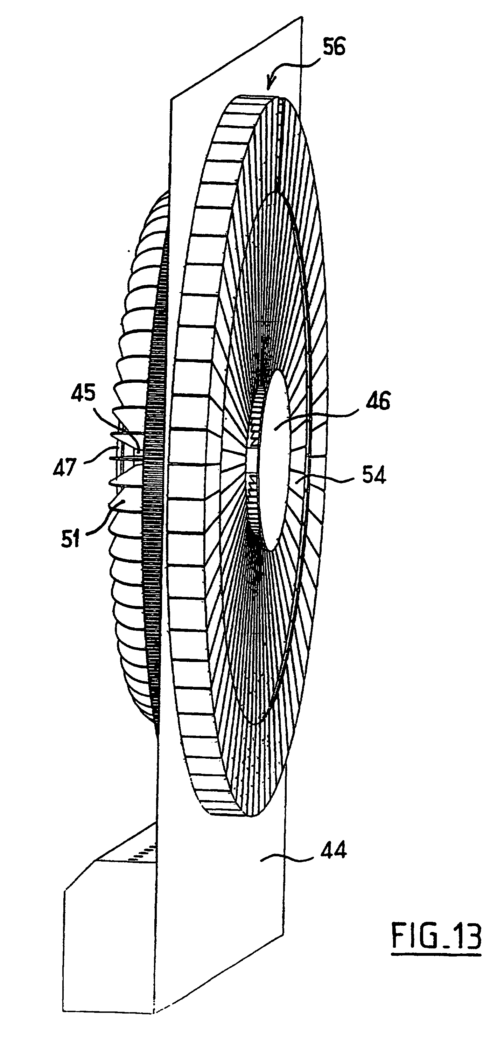

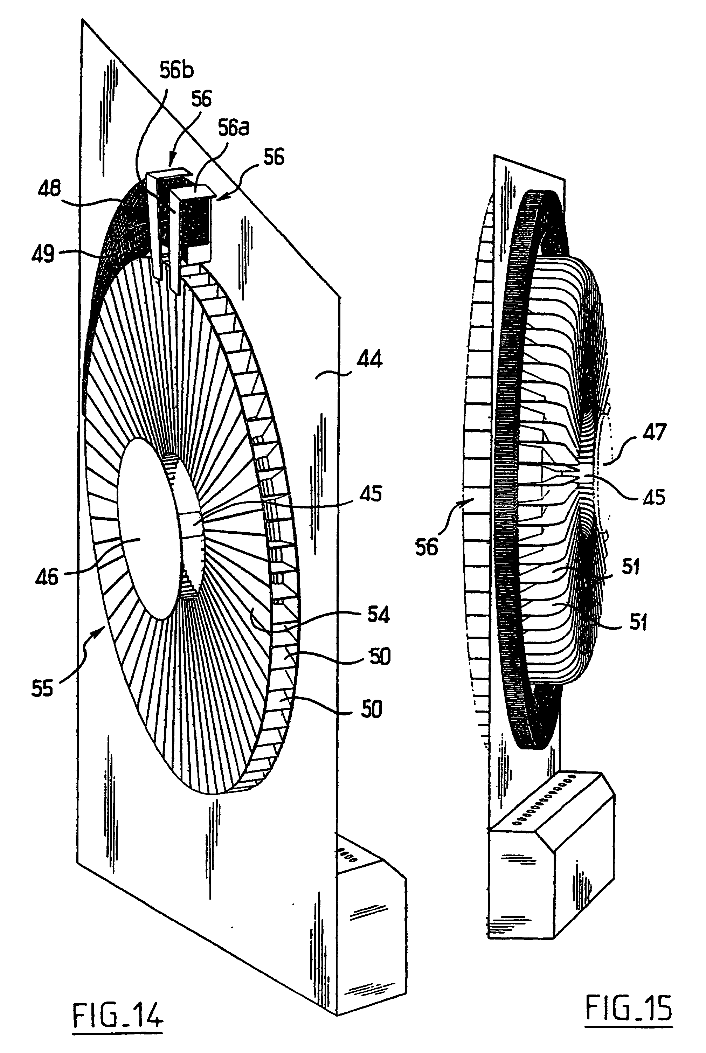

Pour maintenir les fibres dans une orientation radiale par rapport au moyeu, on a prévu , autour de chaque moyeu, des cloisons radiales 50 (voir figures 12 et 14) sur la face avant du panneau 44, et des cloisons radiales 51 (voir figures 13 et 15) sur la face arrière du panneau 44.

Ainsi, sur la face avant, les jarretières 52 quittent un module de contact 48 et s'engagent entre deux cloisons radiales 50 puis débouchent dans un espace libre 53 entourant le moyeu 45 en dessous du disque 46, puis pénètrent à nouveau entre deux cloisons radiales 50 pour aboutir à un autre module de contact 48.

Sur la face arrière du panneau 44, ce sont les fibres optiques issues des câbles de transport et de distribution qui s'engagent entre les cloisons radiales 51 pour venir s'enrouler autour du moyeu 45, en dessous du disque 47.

Sur la face avant du panneau 44, on a en outre prévu une protection des fibres, destinée notamment à empêcher qu'un outil qui échapperait à un opérateur intervenant sur le dispositif ne puisse, dans sa chute, altérer les jarretières.

Cette protection est constituée par des cloisons verticales ou ailettes 54 qui sont chacune montées sur une cloison radiale 50 et sont disposées les unes à côté des autres pour former une sorte de disque 55 à multiples fentes radiales, chaque fente, qui est en fait l'espace séparant deux ailettes adjacentes, permettant l'introduction d'une jarretière entre deux cloisons radiales.

En d'autres termes, l'ensemble constitué par les cloisons radiales et les ailettes forme un ensemble cloisonné dont les différents canaux ou goulottes, délimités entre le panneau 44, les cloisons radiales 50 et les ailettes 54, convergent vers le moyeu 45.

La protection des jarretières est également assurée au niveau de chaque module de contact 48, par des capots basculant 56 constitués, chacun par une cloison 56a perpendiculaire au panneau 44 et tangente au cercle constitué par l'ensemble des modules de contact 48 et une cloison 56b, perpendiculaire à la cloison 56a, qui s'étend depuis le sommet de la cloison 56a en direction du moyeu 45 jusqu'au dessus des ailettes 54.

Chaque capot 56 est articulé sur le panneau 44 à la base de sa cloison 56a .

Sur la figure 13, on a représenté tous les capots 56 en position rabattue, ce qui forme une sorte de couronne prolongeant les ailettes 54 et assurant ainsi une protection intégrale des jarretières sur l'ensemble de leur parcours.

Sur la figure 14, on a éliminé une grande partie des modules de contact 48 et des peignes 49 et l'on n'a conservé que deux capots de protection 56, ce qui permet de mieux les observer.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Dispositif pour relier les conducteurs d'un câble de transport à des conducteurs d'un câble de distribution, les extrémités des conducteurs étant montées à poste fixe sur le dispositif et pouvant être reliées entre elles par des jarretières qui sont chacune connectées, d'une part à un conducteur du câble de transport, et d'autre part à un conducteur du câble de distribution, **caractérisé par le fait que** les extrémités des conducteurs du câble de transport et du câble de distribution sont réparties autour d'un moyeu (16,16') sur lequel peuvent s'enrouler les jarretières reliant chacune deux extrémités de conducteur.

2. Dispositif selon la revendication 1, **caractérisé par le fait que** les extrémités des conducteurs du câble de transport et du câble de distribution sont réparties sensiblement le long d'un cercle centré sur le moyeu.

3. Dispositif selon l'une quelconque des revendications 1 et 2, **caractérisé par le fait qu'**il comporte un panneau (9), les câbles de transport et de distribution se situant d'un côté de ce panneau, les extrémités des conducteurs étant réparties sur le panneau sensiblement suivant un cercle, les jarretières (13,14,15) se situant de l'autre côté du panneau où elles relient les extrémités des conducteurs auxquelles elles sont raccordées à travers ledit panneau.

4. Dispositif selon l'une quelconque des revendications 1 à 3, **caractérisé par le fait que** le moyeu présente une forme tronconique.

5. Dispositif selon l'une quelconque des revendications 1 à 4, **caractérisé par le fait que** le moyeu comporte plusieurs cloisonnements.

6. Dispositif selon la revendication 5, **caractérisé par le fait que** le diamètre, du moyeu varie d'un cloisonnement à l'autre de manière à compenser l'augmentation de chemin à parcourir par la jarretière du fait du décalage axial du cloisonnement.

7. Dispositif selon l'une quelconque des revendications 1 à 6, **caractérisé par le fait qu'**il comporte un moyen pour tendre les jarretières sur le moyeu, par exemple un peigne circulaire (17) situé à l'intérieur du cercle le long duquel les extrémités des conducteurs sont réparties.

8. Dispositif selon l'une quelconque des revendications 1 à 7, **caractérisé par le fait qu'**il comporte un bras (19) monté pivotant sur un axe passant par le centre du moyeu.

9. Dispositif selon l'une quelconque des revendications 1 à 8, **caractérisé par le fait qu'**il comporte un moyen de guidage (40) des parties d'extrémité des jarretières qui assurent leur positionnement selon une direction sensiblement radiale par rapport au moyeu (33).

10. Dispositif selon l'une quelconque des revendications 1 à 9, **caractérisé par le fait qu'**il comporte des capots de protection (56) qui recouvrent un ensemble d'extrémités de jarretières.

11. Dispositif selon l'une quelconque des revendication 1 à 10, **caractérisé par le fait qu'**il comporte un ensemble de goulottes radiales (50, 54), aptes à recevoir plusieurs jarretières et s'étendant depuis le voisinage du moyeu (45) jusqu'au voisinage des extrémités des câbles de transport et de distribution, ces goulottes étant fermées par une cloison (55), munie d'une fente permettant le passage d'une seule jarretière.

12. Dispositif selon l'une quelconque des revendications 1 à 11, **caractérisé par le fait qu'**il comporte un moyeu (45) du côté du panneau (44) où se situent les câbles de transport et de distribution, moyeu (45) autour duquel les conducteurs desdits câbles s'enroulent.

13. Dispositif selon l'une quelconque des revendications 1 à 12, **caractérisé par le fait qu'**il comporte deux panneaux (21,22), découpés sous forme de roues, sensiblement parallèles ayant chacun une face externe opposée à la face externe de l'autre panneau et une face interne en regard de la face interne de l'autre panneau et munis chacun d'un évidement (23,24), les deux évidements se trouvant dans l'alignement l'un de l'autre et formant un moyeu creux, les câbles de transport (25) et de distribution (26) se situant entre les faces internes de ces deux panneaux, les extrémités des conducteurs du câble de transport (25) étant réparties sur le premier panneau (21) autour de l'évidement (23), les extrémités des conducteurs du câble de distribution (26) étant réparties sur le second panneau (22) autour de l'évidement (24) les jarretières (27) s'étendant depuis la face externe du premier panneau (21), où elles sont chacune raccordées à une extrémité d'un conducteur du câble de transport à travers le premier panneau, jusqu'à la face externe du second panneau (22), où elles sont chacune raccordées à une extrémité d'un conducteur du câble de distribution à travers le second panneau, lesdites jarretières passant par les évidements des premier et second panneaux.

14. Dispositif selon l'une quelconque des revendications 1 à 12, **caractérisé par le fait qu'**il comporte, sur un même panneau (29) une pluralité de moyeux autour desquels sont réparties les extrémités des conducteurs du câble de transport et de distribution, un espace étant réservé pour le passage des jarretières (30) entre les centres de deux cercles voisins.

## Claims

1. A device for connecting the conductors of a power cable to conductors of a distribution cable, the ends of the conductors being mounted in stationary fashion on the device and being linked to one another via jumpers which are each connected firstly to a conductor of the power cable and secondly to a conductor of the distribution cable, the device being **characterized by** the fact that the ends of the conductors of the power cable and of the distribution cable are distributed substantially on a hub (16, 16') on which it is possible to wind the jumpers each of which links two conductor ends together.

2. The device as defined in claim 1, **characterized by** the fact that the ends of the power cable and of the distribution cable are distributed substantially on a circle centered on the hub.

3. The device as defined in any one of Claims 1 and 2, **characterized by** the fact that it comprises a panel (9), the power and distribution cables being situated on one side of that panel, the conductor ends being distributed on the panel substantially on a circle, the jumpers (13, 14, 15) being situated on the other side of the panel where they link the ends of the conductors to which they are connected through said panel.

4. The device as defined in any one of Claims 1 to 3, **characterized by** the fact that the hub is in the shape of a truncated cone.

5. The device as defined in any one of Claims 1 to 4, **characterized by** the fact that the hub has a plurality of compartments.

6. The device as defined in Claim 5, **characterized by** the fact that the diameter of the hub varies from one compartment to another in order to compensate for the increase in the distance to be covered by the jumper due to the axial offset of the compartment.

7. The device as defined in any one of Claims 1 to 6, **characterized by** the fact that it has a means for stretching the jumpers on the hub, for example a circular comb (17) situated inside the circle on which the conductor ends are distributed.

8. The device as defined in any one of Claims 1 through 7, **characterized by** the fact that it has an arm (19) pivotally mounted about an axis passing through the center of the hub.

9. The device as defined in any one of claim 1 to 8, **characterized by** the fact that it comprises guiding means (40) for the end parts of the jumpers which ensure their positioning along a direction substantially radial with respect to the hub (33).

10. The device as defined in any one of claims 1 to 9, **characterized by** the fact that it comprises protective covers (56) which cover a set of end parts of jumpers.

11. The device as defined in any one of claims 1 to 10, **characterized by** the fact that it comprises a set of radial spouts (50, 54), adapted to receive several jumpers and extending from the vicinity of the hub (45) up to the vicinity of the ends of the power and distribution cables, wherein said spouts are closed by a partition (55) having a slot allowing the passage of a single jumper.

12. The device as defined in any one of claims 1 to 11, **characterized by** the fact that it comprises a hub (45) on the side of the panel (44) where the power and distribution cables are located, wherein the conductor of said cables are wound on said hub (45).

13. The device as defined in any one of Claims 1 to 12, **characterized by** the fact that it has two substantially parallel panels (21, 22), cut in the form of wheels, each of which has an external surface facing away from the external surface of the other panel and an internal surface facing towards the internal surface of the other panel and each of which is equipped with an opening (23, 24), wherein the two openings are in alignment with one another and form a hollow hub the power cables (25) and distribution cables (26) being situated between the internal surfaces of these two panels, the ends of the power cable (25) conductors being distributed on the first panel (21) around the opening (23), the ends of the distribution cable (26) conductors being distributed on the second panel (22) around the opening (24), the jumpers (27) extending from the external surface of the first panel (21), where each of them is connected to an end of a power cable conductor through the first panel, to the external surface of the second panel (22), where each of them is connected to an end of a distribution cable conductor through the second panel, said jumpers passing through the openings of the first and second panels.

14. The device as defined in any one of Claims 1 to 12, **characterized by** the fact that it has, on a single panel (29), a plurality of hubs around which the ends of the power and distribution cable conductors are distributed, a space being reserved for the jumpers (30) to pass between the centers of two adjacent circles.

## Patentansprüche

1. Vorrichtung zum Verbinden der Leiter eines Übertragungskabels mit Leitern eines Verteilungskabels, wobei die Enden der Leiter auf der Vorrichtung fest montiert sind und miteinander durch Verbindungsdrähte verbunden sein können, die jeweils einerseits an einen Leiter des Übertragungskabels und andererseits an einen Leiter des Verteilungskabels angeschlossen sind, **dadurch gekennzeichnet, daß** die Enden der Leiter des Übertragungskabels und des Verteilungskabels um eine Nabe (16, 16') herum verteilt sind, um die die jeweils zwei Leiterenden verbindenden Verbindungsdrähte sich herumschlingen können.

2. Vorrichtung nach Anspruch 1, **dadurch gekennzeichnet, daß** die Enden der Leiter des Übertragungskabels und des Verteilungskabels im wesentlichen längs eines auf die Nabe zentrierten Kreises verteilt sind.

3. Vorrichtung nach einem der Ansprüche 1 und 2, **dadurch gekennzeichnet, daß** sie eine Tafel (9) aufweist, wobei das Übertragungskabel und das Verteilungskabel auf einer Seite dieser Tafel angeordnet sind, die Enden der Leiter auf der Tafel im wesentlichen gemäß einem Kreis verteilt sind und die Verbindungsdrähte (13, 14, 15) auf der anderen Seite der Tafel gelegen sind, wo sie die Enden der Leiter verbinden, an die sie durch die Tafel hindurch angeschlossen sind.

4. Vorrichtung nach einem der Ansprüche 1 bis 3, **dadurch gekennzeichnet, daß** die Nabe kegelstumpfförmig ist.

5. Vorrichtung nach einem der Ansprüche 1 bis 4, **dadurch gekennzeichnet, daß** die Nabe mehrere Abteilungen aufweist.

6. Vorrichtung nach Anspruch 5, **dadurch gekennzeichnet, daß** der Durchmesser der Nabe sich von einer Abteilung zur anderen so ändert, daß die Vergrößerung des von dem Verbindungsdraht zu durchlaufenden Wegs infolge der axialen Versetzung der Abteilung ausgeglichen wird.

7. Vorrichtung nach einem der Ansprüche 1 bis 6, **dadurch gekennzeichnet, daß** sie ein Mittel zum Spannen der Verbindungsdrähte auf der Nabe, beispielsweise einen kreisförmigen Kamm (17), aufweisen, der im Inneren des Kreises gelegen ist, längs welchem die Enden der Leiter verteilt sind.

8. Vorrichtung nach einem der Ansprüche 1 bis 7, **dadurch gekennzeichnet, daß** sie einen Arm (19) aufweist, der auf einer durch den Mittelpunkt der Nabe verlaufenden Achse verschwenkbar montiert ist.

9. Vorrichtung nach einem der Ansprüche 1 bis 8, **dadurch gekennzeichnet, daß** sie ein Mittel (40) zum Führen der Endteile der Verbindungsdrähte aufweist, die ihre Positionierung gemäß einer bezüglich der Nabe (33) im wesentlichen radialen Richtung gewährleisten.

10. Vorrichtung nach einem der Ansprüche 1 bis 9, **dadurch gekennzeichnet, daß** sie Schutzkappen (56) aufweist, die eine Gruppe von Enden von Verbindungsdrähten abdecken.

11. Vorrichtung nach einem der Ansprüche 1 bis 10, **dadurch gekennzeichnet, daß** sie eine Anzahl von radialen Rinnen (50, 54) aufweist, die geeignet sind, mehrere Verbindungsdrähte aufzunehmen, und sich aus der Nähe der Nabe (45) bis in die Nähe der Enden des Übertragungskabels und des Verteilungskabels erstrecken, wobei diese Rinnen durch eine Wand (55) geschlossen sind, die mit einem Schlitz versehen ist, der den Durchgang nur eines Verbindungsdrahtes gestattet.

12. Vorrichtung nach einem der Ansprüche 1 bis 11, **dadurch gekennzeichnet, daß** sie auf der Seite der Tafel (44), auf der das Übertragungskabel und das Verteilungskabel gelegen sind, eine Nabe (45) aufweist, um welche sich die Leiter dieser Kabel schlingen.

13. Vorrichtung nach einem der Ansprüche 1 bis 12, **dadurch gekennzeichnet, daß** sie zwei in Form von Rädern geschnittene, im wesentlichen parallele Tafeln (21, 22) aufweist, die jeweils eine Außenseite, die der Außenseite der anderen Tafel entgegengesetzt ist, und eine Innenseite gegenüber der Innenseite der anderen Tafel besitzen und jeweils mit einer Aussparung (23, 24) versehen sind, wobei die beiden Aussparungen miteinander in Flucht sind und eine hohle Nabe bilden, wobei das Übertragungskabel (25) und das Verteilungskabel (26) zwischen den Innenseiten dieser beiden Tafeln liegen, die Enden der Leiter des Übertragungskabels (25) auf der ersten Tafel (21) um die Aussparung (23) herum verteilt sind, die Enden der Leiter des Verteilungskabels (26) auf der zweiten Tafel (22) um die Aussparung (24) herum verteilt sind, die Verbindungsdrähte (27) sich von der Außenseite der ersten Tafel (21), wo sie jeweils an ein Ende eines Leiters des Übertragungskabels durch die erste Tafel hindurch angeschlossen sind, bis zu der Außenseite der zweiten Tafel (22) erstrecken, wo sie jeweils an ein Ende eines Leiters des Verteilungskabels durch die zweite Tafel hindurch angeschlossen sind, wobei diese Verbindungsdrähte durch die Aussparungen der ersten und der zweiten Tafel laufen.

14. Vorrichtung nach einem der Ansprüche 1 bis 12, **dadurch gekennzeichnet, daß** sie auf einer gemeinsamen Tafel (29) eine Vielzahl von Naben aufweist, um die herum die Enden der Leiter des Übertragungs- und Verteilungskabels verteilt sind, wobei ein Raum für den Durchgang der Verbindungsdrähte (30) zwischen den Mittelpunkten von zwei benachbarten Kreisen vorgesehen ist.
